# EUROPÄISCHE PATENTSCHRIFT

(11) **EP 3 057 861 B1**
(45) Veröffentlichungstag und Bekanntmachung des Hinweises auf die Patenterteilung: **13.12.2017**
(21) Anmeldenummer: 14790536.8
(22) Anmeldetag: 14.10.2014
(51) Int. Cl.: G01L 1/24, B62M 6/50, B60L 11/00, G01L 3/10

(54) **VERFAHREN ZUM MESSEN DES VON EINEM FAHRER AUF DIE PEDALE EINES E-BIKES AUFGEBRACHTEN DREHMOMENTES UND E-BIKE**
METHOD TO MEASURE PEDAL TORQUE OF AN E-BIKE AND E-BIKE
PROCÉDÉ DE MESURE D'UN COUPLE APPLIQUÉ SUR LES PÉDALES D'UN VELO ELECTRIQUE ET VELO ELECTRIQUE

(30) Priorität: 15.10.2013 DE 102013220871
(43) Veröffentlichungstag der Anmeldung: 24.08.2016
(73) Patentinhaber: Continental Automotive GmbH, 30165 Hannover (DE)
(72) Erfinder: WEIGL, Manfred, 93161 Sinzing / Viehhausen (DE)
(86) Internationale Anmeldenummer: PCT/EP2014/072047
(87) Internationale Veröffentlichungsnummer: WO 2015/055673

(56) Entgegenhaltungen:
- EP-A1- 0 983 934
- WO-A1-01/30643
- DE-A1-102011 089 559
- DE-U1-202012 006 698
- US-A1- 2012 234 108

## Beschreibung

Die vorliegende Erfindung betrifft ein Verfahren zum Messen des von einem Fahrer auf die Pedale eines E-Bikes aufgebrachten Drehmomentes mit den Merkmalen des Oberbegriffes von Patentanspruch 1.

Bei derartigen E-Bikes (Fahrräder mit elektrischem Antrieb) ist eine optimale Steuerung des elektrischen Antriebes von Bedeutung. Hierzu kann das Signal eines Sensors dienen, welcher das Drehmoment misst, das der Fahrer über die Pedale aufbringt.

Bekannt ist hierbei ein Drehmomentsensor, welcher die Verspannung einer Welle misst, über die die Pedale das Drehmoment auf das vordere Kettenrad überträgt. Da es sich hierbei um eine sich drehende Welle handelt, muss das Messprinzip berührungslos und drehunabhängig sein. Das verwendete Prinzip erfordert eine spezielle Welle, welche entweder aus magnetisch geeignetem Metall gefertigt ist oder geeignet beschichtet ist. Zudem sind aufwendige Spulen und eine elektrische Signalaufbereitung zur magnetischen Messung nötig.

Bei kostengünstigeren Lösungen wird die Unterstützung durch den Elektromotor über eine Drehzahlerfassung am Tretlager oder Zahnkranz gesteuert. Allerdings hat dies Nachteile in Bezug auf die Reaktionszeit und Dosierbarkeit der Hilfskraft.

Ein Verfahren mit den Merkmalen des Oberbegriffs von Patentanspruch 1 ist aus der DE 10 2010 001 775 A1 bekannt. Bei dem bekannten Verfahren wird durch eine Pedalkraft eine auf das Tretlager einwirkende Kraft erzeugt. Aufgrund dieser Kraft bewegt sich das Tretlager in einem Zusatzlager, so dass ein Kolben in einer Druckmesskammer vorgeschoben wird. Die durch den derart aufgebauten Kraftsensor erfasste Druckänderung wird einer Steuereinheit zugeführt und zur Ermittlung des Drehmomentes verwendet.

Aus der EP 2 511 165 A1 ist ein Drehmomentmessverfahren bekannt, bei dem eine unter der Wirkung der Pedalkraft auf ein Montageelement und die Hinterachse des Fahrrades einwirkende Kraft von einem Sensor gemessen und zur Drehmomentermittlung benutzt wird.

Die EP 2 682 335 A1 beschreibt ein Verfahren, bei dem eine Pedalkraftdetektionsvorrichtung mittels Dehnungsmessstreifen die durch Pedalkraft in einem Metallkörper erzeugten Spannungen misst und hieraus das Drehmoment ermittelt.

Beim Gegenstand der DE 10 2012 215 022 A1 findet eine zusätzlich zur Tretlagerbefestigung vorgesehene Messhülse Verwendung, die mit einer die Messhülse koaxial umgebenden Auswerteeinheit zusammenwirkt.

Aus der DE 10 2011 089 559 A1 ist ein Kurbeltrieb für ein Fahrrad bekannt, der u. a. ein Planetengetriebe sowie einen am Hohlrad des Planetengetriebes angeordneten Sensor zur Ermittlung des Abstützmomentes des Hohlrades aufweist. Das Abstützmoment des Hohlrades wird hierbei durch Messung der Bewegung des Hohlrades in Umfangsrichtung über einen Sensor ermittelt, woraus die resultierende Kraft und aus dieser Kraft das vom Fahrer eingeleitete Drehmoment berechnet werden kann.

Aus der DE 20 2012 006 698 U1 ist eine Kraftmessvorrichtung an einer Tretlagerbaugruppe eines Fahrrades bekannt, die ein Hülsengehäuse, einen Ringkörper, eine Sensorhalteeinheit, eine Kraftübertragungshalterung und eine Hall-Messeinheit umfasst. Der Ringkörper besitzt eine Verformungsregion, die ausgestaltet ist, um eine Verformungsbewegung entsprechend der Drehkraft zu erfahren, wobei diese Verformungsbewegung durch den vorgesehenen Sensor erfasst wird.

Der vorliegenden Erfindung liegt die Aufgabe zugrunde, ein Verfahren der eingangs beschriebenen Art zur Verfügung zu stellen, das sich auf einfache Weise mit besonders einfachen Bauteilen realisieren lässt.

Diese Aufgabe wird erfindungsgemäß bei einem Verfahren der angegebenen Art durch die kennzeichnenden Merkmale von Patentanspruch 1 gelöst.

Die erfindungsgemäß vorgeschlagene Lösung ist für Fahrräder mit Nabenmotor im Vorder- oder Hinterrad geeignet. Erfindungsgemäß findet keine direkte Drehmomentmessung an einer drehenden Welle statt, sondern diese wird durch eine Kraftmessung ersetzt. Dabei wird die Zugkraft gemessen, welche auf die Kette wirkt. Dies ist eine Kraft, welche auf die Hinterradnabe und auf das Tretlager wirkt. Zur Messung der Kettenzugkraft wird nunmehr die elastische Verformung oder Auslenkung der Tretlagerbefestigung gemessen. Dies kann auf verschiedene Weise erfolgen, wie nachfolgend ausgeführt.

Durch Ersetzen einer Drehmomentmessung durch eine Kraftmessung ist es möglich, das zum Messen der durch die Kraft bewirkten elastischen Verformung oder Auslenkung erforderliche Sensorelement ortsfest anzubringen. Es ist keine Messung an einer drehenden Welle nötig. Hierzu können einfache Sensorelemente eingesetzt werden. Durch die Messung der elastischen Verformung oder Auslenkung der Tretlager- und/oder Radnaben-Befestigung wird nur die Kraftkomponente zwischen Hinterachse und Tretlager gemessen. Somit wird erreicht, dass nur Kraft, welche Vortrieb verursacht, erfasst wird. Würde der Fahrer beispielsweise beide Pedale gleichzeitig nach unten oder oben drücken (beispielsweise auf den Pedalen stehen), würde sich keine Kraftkomponente in Richtung Hinterrad ergeben. Der Sensor würde also kein Antriebsmoment erkennen und das Fahrrad nicht ungewollt beschleunigen.

Erfindungsgemäß wird eine Verformungsmessung oder Auslenkungsmessung am Tretlager durchgeführt, da auf die Hinterradnabe nicht nur die von der Pedalkraft ausgeübten Kräfte wirken, sondern auch die Betätigung der Hinterradbremse oder der Antriebsmotor Kraft überlagern kann. Zudem bietet das Tretlagergehäuse mehr Einbauraum für die benötigten Komponenten zur Messung.

Da eine elastische Verformung oder Auslenkung des Tretlagers durch die aufgebrachte Kettenzugkraft in Horizontalrichtung möglicherweise als störend empfunden werden könnte, sollte die Verformung bzw. Auslenkung so klein wie möglich sein. Vorzugsweise wird daher die Verformungs- oder Auslenkungsmessung auf magnetische Weise durchgeführt, da hierbei bereits mit Änderungen im Bereich von 1 mm mit ausreichender Auflösung gemessen werden kann. Die Messung kann dabei beispielsweise mittels einem Magneten und einem Hallsensor durchgeführt werden. Auch kann die Messung nach dem Prinzip eines induktiven Näherungssensors durchgeführt werden, beispielsweise mit einer Spule mit Eisenkern. Für beide Prinzipien sind sehr kostengünstige Lösungen einschließlich Signalaufbereitung verfügbar.

Bei einer weiteren Variante des erfindungsgemäßen Verfahrens wird die Verformungs- oder Auslenkungsmessung mittels Dehnungsmessstreifen durchgeführt.

Erfindungsgemäß wird vorzugsweise die elastische Verformung oder Auslenkung der Tretlagerbefestigung in Horizontalrichtung gemessen, um hierdurch die auf die Kette des E-Bikes wirkende Kraft, die vom Fahrer aufgebracht wird, zu erfassen. Die Messung wird dabei so realisiert, dass die Verformung oder Auslenkung einer Feder gemessen wird, gegen die ein exzentrisch drehbar gelagertes Tretlager wirkt.

Die vorliegende Erfindung betrifft ferner ein E-Bike mit einem Tretlager. Das Tretlager ist so am Fahrradrahmen befestigt, dass die von einem Fahrer über die Pedale auf die Kette aufgebrachte Zugkraft eine messbare elastische Verformung oder Auslenkung der Befestigung bewirkt, und das E-Bike ist mit einem Sensor zur Messung dieser Verformung oder Auslenkung versehen.

Auf die Vorteile der Verformungs- oder Auslenkungsmessung am Tretlager gegenüber der Messung an der Hinterradnabe wurde bereits hingewiesen. Bei dieser Ausführungsform ist das Tretlager vorzugsweise so am Rahmen montiert, dass es in Vertikalrichtung möglichst starr fixiert ist, horizontal jedoch eine kraftabhängige Verformung oder Auslenkung erlaubt. Auf diese Weise wird sichergestellt, dass nur die der Kettenzugkraft entsprechende horizontale Verformungs- oder Auslenkungskomponente gemessen wird.

Um die Messung der Verformung oder Auslenkung der Tretlagerbefestigung realisieren zu können, ist das Tretlager exzentrisch drehbar am Rahmen gelagert, beispielsweise über eine Schwinge, und wirkt gegen eine Feder, deren Verformung oder Auslenkung vom Sensor gemessen wird.

Der Sensor kann als magnetischer Sensor ausgebildet sein. Bei einer anderen Ausführungsform der Erfindung wird der Sensor von Dehnungsmessstreifen gebildet.

Die Erfindung wird nachfolgend anhand eines Ausführungsbeispieles in Verbindung mit der Zeichnung im Einzelnen erläutert. Es zeigen:
- Figur 1: schematisch den Kettentrieb eines Fahrrades; und
- Figur 2: einen Vertikalschnitt durch das Tretlager eines Fahrrades mit einer elastischen Befestigung desselben.

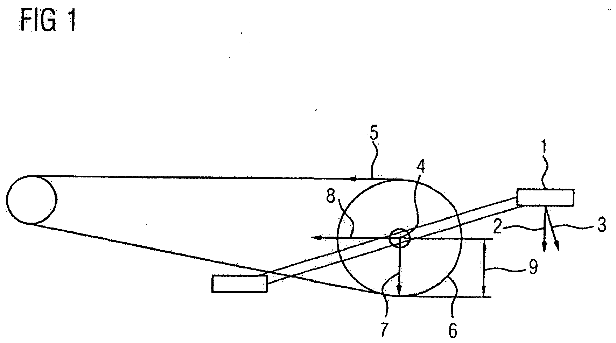

Bei dem in Figur 1 schematisch dargestellten Kettentrieb eines Fahrrades ist beispielhaft eine Pedalposition mit einer senkrecht ausgeübten Pedalkraft gezeigt. Über ein Pedal 1 wird eine Kraft 2 (als Vektor dargestellt) aufgebracht. Diese Kraft 2 besitzt eine Kraftkomponente 3, die ein Drehmoment auf die Pedalwelle 4 ausübt. Dieses Drehmoment hat eine Kettenkraft 5 zur Folge, welche um das Verhältnis von Kurbellänge zu Radius des Zahnkranzes 6 größer ist als die Kraftkomponente 3. Die Kräfte 2 und 5 werden im Tretlager abgestützt und ergeben hier die Kraft 7, welche senkrecht nach unten gerichtet ist und keine Informationen über das Drehmoment enthält, und die Kraft 8, die im Produkt mit dem Zahnkranzradius 9 das Drehmoment ergibt, da die Kraft 8 der Kraft 5 entspricht. Durch Messen der Kraft 8 kann somit das vom Fahrer eingebrachte Drehmoment bestimmt werden.

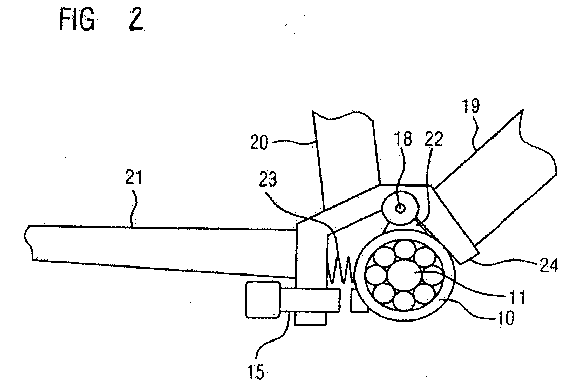

In Figur 2 ist eine Ausführungsform eines Tretlagers im Vertikalschnitt dargestellt. Bei dieser Ausführungsform ist das Tretlager 10 exzentrisch drehbar über eine kurze Schwinge 22 aufgehängt. Die Drehachse 18 der Schwinge verläuft hier parallel zur Tretlagerwelle 11 und ist am Fahrradrahmen an der Verbindung von Steuerrohr 19, Sattelrohr 20 und Hinterbau 21 befestigt. Anstelle des üblichen rohrförmigen Tretlagergehäuses verbindet ein Formteil 24 Steuerrohr 19, Sattelrohr 20 und Hinterbau 21. Das Tretlager 10 kann hierbei, verursacht durch die Kraft 8, nach hinten schwenken. Diese Bewegung wird durch ein Federelement 23 begrenzt, welches eine zur Kraft 8 in erster Ordnung proportionale Auslenkung erlaubt. Diese Auslenkung wird durch einen Hallsensor (oder Induktivsensor) 15 gemessen und als Maß für die Kraft 8 verwendet. Der Vorteil dieser etwas aufwendigeren Lösung besteht darin, dass das Tretlager auch bei hohen Tretkräften parallel zur Hinterradnabe bleibt.

## Patentansprüche

1. Verfahren zum Messen des von einem Fahrer auf die Pedale (1) eines E-Bikes aufgebrachten Drehmomentes, bei dem die auf die Kette des E-Bikes wirkende Kraft durch Messung der elastischen Verformung oder Auslenkung der Tretlagerbefestigung ermittelt und hieraus das aufgebrachte Drehmoment bestimmt wird, **dadurch gekennzeichnet, dass** die Verformung oder Auslenkung einer Feder (23) gemessen wird, gegen die ein exzentrisch drehbar gelagertes Tretlager (10) wirkt.

2. Verfahren nach Anspruch 1, **dadurch gekenn**- **zeichnet ,** dass die Verformungs- oder Auslenkungsmessung auf magnetische Weise durchgeführt wird.

3. Verfahren nach Anspruch 2, **dadurch gekenn**- **zeichnet**, dass die Verformungs- oder Auslenküngsmessung mittels einem Magneten und einem Hallsensor durchgeführt wird.

4. Verfahren nach Anspruch 2, **dadurch gekennzeichnet, dass** die Verformungs- oder Auslenkungsmessung nach dem Prinzip eines induktiven Näherungssensors durchgeführt wird.

5. Verfahren nach Anspruch 1, **dadurch gekennzeichnet, dass** die Verformungs- oder Auslenkungsmessung mittels Dehnungsmessstreifen durchgeführt wird.

6. E-Bike mit einem Tretlager (10), bei dem das Tretlager so am Fahrradrahmen befestigt ist, dass die von einem Fahrer über die Pedale (1) auf die Kette aufgebrachte Zugkraft eine messbare elastische Verformung der Befestigung bewirkt, und das mit einem Sensor (15) zur Messung dieser Verformung oder Auslenkung versehen ist, **dadurch gekennzeichnet, dass** das Tretlager (10) exzentrisch drehbar am Rahmen gelagert ist und gegen eine Feder (23) wirkt, deren Verformung oder Auslenkung vom Sensor (15) gemessen wird.

7. E-Bike nach Anspruch 6, **dadurch gekennzeichnet, dass** das Tretlager (10) so am Rahmen montiert ist, dass es in Vertikalrichtung möglichst starr fixiert ist, horizontal jedoch eine kraftabhängige Verformung oder Auslenkung erlaubt.

8. E-Bike nach einem der Ansprüche 6 oder 7, **dadurch gekennzeichnet, dass** der Sensor (15) als magnetischer Sensor ausgebildet ist.

9. E-Bike nach einem der Ansprüche 6 bis 8, **dadurch gekennzeichnet, dass** der Sensor von Dehnungsmessstreifen gebildet ist.

## Claims

1. Method for measuring the torque applied to the pedals (1) of an E-bike by a rider, in which method the force acting on the chain of the E-bike is ascertained by measuring the elastic deformation or deflection of the bottom bracket fastening arrangement and the applied torque is determined from this measurement, **characterized in that** the deformation or deflection of a spring (23) against which an eccentrically rotatably mounted bottom bracket (10) acts is measured.

2. Method according to Claim 1, **characterized in that** the deformation or deflection measurement is carried out in a magnetic manner.

3. Method according to Claim 2, **characterized in that** the deformation or deflection measurement is carried out by means of a magnet and a Hall sensor.

4. Method according to Claim 2, **characterized in that** the deformation or deflection measurement is carried out in accordance with the principle of an inductive proximity sensor.

5. Method according to Claim 1, **characterized in that** the deformation or deflection measurement is carried out by means of strain gauges.

6. E-bike comprising a bottom bracket (10), in which E-bike the bottom bracket is fastened to the bicycle frame such that the tensile force applied to the chain by a rider via the pedals (1) causes a measurable elastic deformation of the fastening arrangement, and which E-bike is provided with a sensor (15) for measuring this deformation or deflection, **characterized in that** the bottom bracket (10) is mounted on the frame in an eccentrically rotatable manner and acts against a spring (23), the deformation or deflection of the said spring being measured by the sensor (15).

7. E-bike according to Claim 6, **characterized in that** the bottom bracket (10) is mounted on the frame such that it is fixed as rigidly as possible in the vertical direction, but allows force-dependent deformation or deflection horizontally.

8. E-bike according to either of Claims 6 and 7, **characterized in that** the sensor (15) is in the form of a magnetic sensor.

9. E-bike according to one of Claims 6 to 8, **characterized in that** the sensor is formed by strain gauges.

## Revendications

1. Procédé de mesure du couple appliqué à la pédale (1) d'un vélo électrique par un cycliste, dans lequel la force exercée sur la chaîne du vélo électrique est déterminée par mesure de la déformation élastique ou de la déviation du dispositif de fixation du pédalier, et le couple appliqué est déterminé à partir de ladite mesure, **caractérisé en ce que** la déformation ou la déviation d'un ressort (23), contre lequel agit le pédalier (10) monté tournant de manière excentrique, est mesurée.

2. Procédé selon la revendication 1, **caractérisé en ce que** la mesure de la déformation élastique ou de la déviation est effectuée de manière magnétique.

3. Procédé selon la revendication 2, **caractérisé en ce que** la mesure de la déformation ou de la déviation est effectuée au moyen d'un aimant et d'un capteur Hall.

4. Procédé selon la revendication 2, **caractérisé en ce que** la mesure de la déformation ou de la déviation est effectuée conformément au principe d'un capteur de proximité à induction.

5. Procédé selon la revendication 1, **caractérisé en ce que** la mesure de la déformation ou de la déviation est effectuée au moyen de jauges de contrainte.

6. Vélo électrique comportant un pédalier (10), dans lequel le pédalier est fixé au cadre de vélo de manière à ce que la force de traction exercée sur la chaîne par un cycliste par l'intermédiaire de la pédale (1) provoque une déformation élastique mesurable du dispositif de fixation, et qui est muni d'un capteur (15) destiné à mesurer ladite déformation ou déviation, **caractérisé en ce que** le pédalier (10) est monté tournant de manière excentrique sur le cadre et agit contre un ressort (23) dont la déformation ou la déviation est mesurée par le capteur (15).

7. Vélo électrique selon la revendication 6, **caractérisé en ce que** le pédalier (10) est monté sur le cadre de manière à ce qu'il soit fixé le plus rigidement possible en sens vertical, mais qu'il permette une déformation ou une déviation dépendant de la force en sens horizontal.

8. Vélo électrique selon l'une quelconque des revendications 6 ou 7, **caractérisé en ce que** le capteur (15) est réalisé sous la forme d'un capteur magnétique.

9. Vélo électrique selon l'une quelconque des revendications 6 à 8, **caractérisé en ce que** le capteur est formé de jauges de contrainte.
